# EUROPEAN PATENT APPLICATION

(11) **EP 4 292 916 A1**
(43) Date of publication of application: **20.12.2023**
(21) Application number: 23179510.5
(22) Date of filing: 15.06.2023
(51) Int. Cl.: B62J 9/24

(54) **TELESCOPIC TOP BOX FOR MOTORCYCLES**

(30) Priority: 15.06.2022 IT 202200012653
(71) Applicant: Koboldbike di Negrini Giampaolo, 40133 Bologna (IT)
(72) Inventor: NEGRINI, Giampaolo, 40133 Bologna (IT)
(74) Representative: de Alteriis, Renato

(57) **Abstract**

A top box (1) for motorcycle or motor scooter,
comprising an inner hollow body (11) and an outer hollow body (12), inserted into each other, mutually constrained so that they can slide relative to each other along an axis (X),
whereby the top box (1) is telescopic, so that it can take a retracted configuration, in which the top box (1) has a first inner volume (V1), and so that it can take an extended configuration, in which the top box (1) has a second inner volume (V2) greater than the first inner volume (V1);
wherein the inner hollow body (11) and outer hollow body (12) have a respective side wall (110, 120) which extends about said axis (X);
wherein the inner hollow body (11) and outer hollow body (12) are made of aluminum or aluminum alloy.

## Description

### Field of the invention

The present invention relates to a top box for motorcycles or motor scooters.

### Background art

Top boxes for motorcycles have an inner volume designed to accommodate one or more items.
The known top boxes for motorcycles are made so that the inner volume is not variable, in particular, so that the inner volume cannot be expanded.
However, it is desirable to be able to expand and reduce the inner volume of a top box for motorcycles, when necessary.

CN213620056 describes a top box with two sliding parts to be able to vary the volume of the top box. Disadvantageously, the two parts are fixed together by means of a plurality of screws. Disadvantageously, a plurality of holes is needed, and thus machining is required to make them, so it is not easily achievable. Disadvantageously, it is not easy to be able to vary the volume of the top box described in CN213620056, because the plurality of screws must be screwed and unscrewed each time.

Furthermore, the top box of CN213620056 does not maximize the inner volume with respect to the overall footprint and it is not made in an environmentally friendly manner.

### Summary of the invention

It is an object of the present invention to make a top box of motorcycles or motor scooters which can be easily expanded and reduced, i.e., an expandable top box.
In particular, it is an object of the present invention to make an expandable top box for motorcycles or motor scooters so as to maximize the inner volume with respect to the overall footprint.
It is a further object of the invention to make an expandable top box for motorcycles or motor scooters which can be built easily and cost-effectively.
It is a further object of the invention to make an expandable top box for motorcycles or motor scooters which is environmentally friendly.

The present invention achieves at least one of the aforesaid objects, and other objects which will be apparent in light of the present description, by means of a top box for motorcycles or motor scooters according to claim 1.

Advantageously, the top box is constructively simple; in particular, it has a low number of components and requires less machining on components.

Furthermore, advantageously, the top box is particularly easy to use; in particular, it is particularly easy to make the top box transition from the retracted configuration to the extended configuration and vice versa.

The aluminum or aluminum alloy was carefully selected to make an expandable top box as it offers several advantages.
In particular, hollow bodies can be made with thinner walls by choosing to make the hollow bodies from aluminum or aluminum alloy instead of, for example, plastic. Therefore, the inner volume of the top box is optimized with respect to the overall footprint.
Furthermore, plastic is in many ways much more polluting than aluminum or aluminum alloy.
Furthermore, aluminum or aluminum alloy also offers adequate mechanical properties in the event of an accident.

Preferably, the top box can be designed so that the retracted configuration is intended to be used while the motorcycle is in motion and so that the extended configuration is intended to be used during stops. In this manner, it is possible to further simplify the construction of the top box and/or make an expanded configuration having a very large inner volume.

Further features and advantages of the invention will become more apparent in the light of the detailed description of exemplary but not exclusive embodiments. The dependent claims describe particular embodiments of the invention.

### Brief description of the drawings

The description of the invention refers to the accompanying drawings, which are provided by way of non-limiting example, in which:

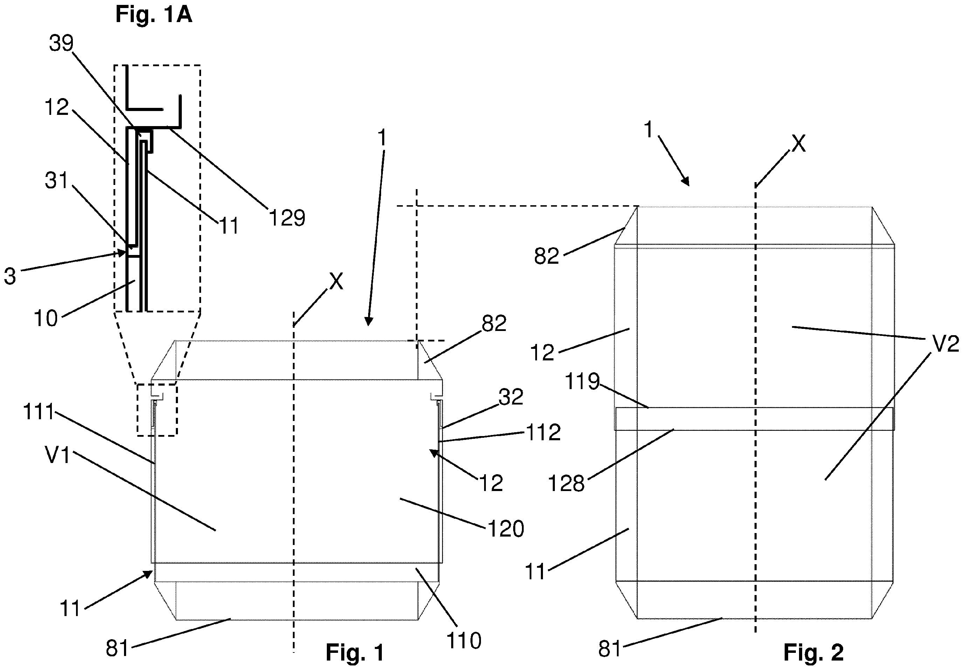

Fig. 1 diagrammatically shows a top box according to the invention in the retracted configuration;
Fig. 1A shows an enlarged detail of Fig. 1;
Fig. 2 diagrammatically shows the top box in Fig. 1 in the extended configuration;
Fig. 3 shows a diagrammatic section view of the top box in Fig. 1 in the extended configuration;
Fig. 3A shows an enlarged detail of Fig. 3;
Fig. 4 shows section A-A in Fig. 3;
Fig. 5 shows section B-B in Fig. 3;
Fig. 6 diagrammatically shows a section view, taken along a plane orthogonal to axis X, of the top box according to the invention;
Fig. 7 shows a top box component according to the invention, taken along section C-C in Fig. 6.
The same elements or functionally equivalent elements have the same reference numerals.

### Description of example embodiments of the invention

Embodiments of a top box 1 for motorcycles or motor scooters, according to the invention, are described with reference to the figures.

In all the embodiments, the top box 1 comprises an inner hollow body 11 and an outer hollow body 12, inserted into each other, mutually constrained so that they can slide relative to each other along an axis X,
whereby, the top box 1 is telescopic so that it can take a retracted configuration, in which the top box 1 has a first inner volume V1, and so that it can take an extended configuration, in which the top box 1 has a second inner volume V2 greater than the first inner volume V1;
wherein the inner hollow body 11 and outer hollow body 12 have a respective side wall 110, 120 which extends about said axis X;
wherein the inner hollow body 11 and outer hollow body 12 are made of aluminum or aluminum alloy.

Preferably, the inner hollow body 11 is adapted to be constrained to the motorcycle or motor scooter.

The inner hollow body 11 is preferably provided with the bottom 81 of the top box 1.
Preferably, the bottom 81 is fixed to the side wall 110 of the inner hollow body 11 by means of rivets.

A door 82 is preferably constrained to the outer hollow body 12 to open and close the top box 1. The door 82 and the bottom 81 are preferably opposite to each other. The door 82 is constrained to the outer hollow body 12 preferably by means of one or more hinges 83.
Preferably, also the bottom 81 and door 82 are made of aluminum or aluminum alloy.

Advantageously, the top box 1 may, preferably, be configured so that it can greatly expand its inner volume.
Preferably, the aforesaid second inner volume V2 is at least 40% greater, preferably from 40 to 80% greater, preferably from 60 to 80% greater, with respect to the first inner volume V1.
Preferably, the aforesaid first inner volume V1 is from about 45 to about 62 liters, e.g., equal to about 56 liters.
By way of example only, the top box 1 can be configured to have an inner volume V1, in the retracted configuration, equal to about 56 liters, and an inner volume V2, in the extended configuration, equal to about 96 liters.
Preferably, the thickness, orthogonally to said axis X, of each side wall 110, 120 is 1 to 3 mm, e.g., equal to about 2 mm.

Preferably, the stroke of the outer hollow body 12 to transition from the retracted to the extended configuration can be between 90 and 390 mm, e.g. equal to about 190 mm.

The top box 1, in particular, comprises
- sliding means 21, 22 adapted to slide the inner hollow body 11 and the outer hollow body 12 mutually along said axis X, in particular, adapted to slide the outer hollow body 12 relative to the inner hollow body 11;
- constraining means 3 adapted to allow or prevent the sliding of the outer hollow body 12 with respect to the inner hollow body 11. In particular, the constraining means 3 are adapted to allow or prevent the sliding of the outer hollow body 12 relative to the inner hollow body 11, in particular when the top box 1 is in said extended configuration.

Preferably, said constraining means 3 comprise two protrusions 31, 32 which extend outwards respectively from a first portion 111 (or panel) and a second portion 112 (or panel) of said side wall 110 of the inner hollow body 11, respectively.
In particular, the protrusions 31, 32 extend transversely with respect to the axis X, preferably radially with respect to the axis X.

In the extended configuration, the outer hollow body 12 rests on said protrusions 31, 32, so as to prevent the outer hollow body 12 from sliding toward the inner hollow body 11;
and in the retracted configuration, said two protrusions 31, 32 are arranged in a respective gap 10 between the inner hollow body 11 and the outer hollow body 12.

Each protrusion 31, 32 defines an abutment surface for the lower edge 128 of the outer hollow body 12. Said abutment surface is preferably orthogonal to the axis X.

Preferably, the length, or thickness, orthogonally to axis X of each protrusion 31, 32 is from 1 to 3 mm. The thickness of each protrusion 31, 32 substantially corresponds to the width of the gap 10 between portion 111 of the inner hollow body 11 and portion 112 and the outer hollow body 12.

In particular, said protrusions 31, 32 are fixed to said first portion 111 and second portion 112 of the side wall 110 of the inner hollow body 11, respectively.

Advantageously, said first portion 111 and second portion 112 of the side wall 110 of the inner hollow body 11 are mutually opposite and are adapted to bend so that, in the extended configuration, an inward displacement (toward axis X) of said protrusions 31, 32 results by applying pressure on said first portion 111 and second portion 112, so that the outer hollow body 12 slides or may slide toward the inner hollow body 11, in particular, slides (in particular when it is mounted on the motorcycle) or may slide downwards, bringing the top box 1 to the retracted configuration.

Therefore, advantageously, the top box 1 is constructively simple; in particular, it has a reduced number of components and requires less machining on components.

Furthermore, advantageously, the top box 1 is particularly simple to use, in particular is it is particularly easy to make the top box 1 transition from the retracted to the extended configuration and vice versa.
Preferably, the outer hollow body 12 is provided with an inner edge 129 adapted to abut against the upper edge 119 (distal from the bottom 81) of the inner hollow body 11 and/or against an upper portion 39 of said constraining means 3 in the retracted configuration of the top box 1.

Preferably, each protrusion 31, 32 is part of a respective body 30 coupled to the upper edge 119 of the inner hollow body 11.

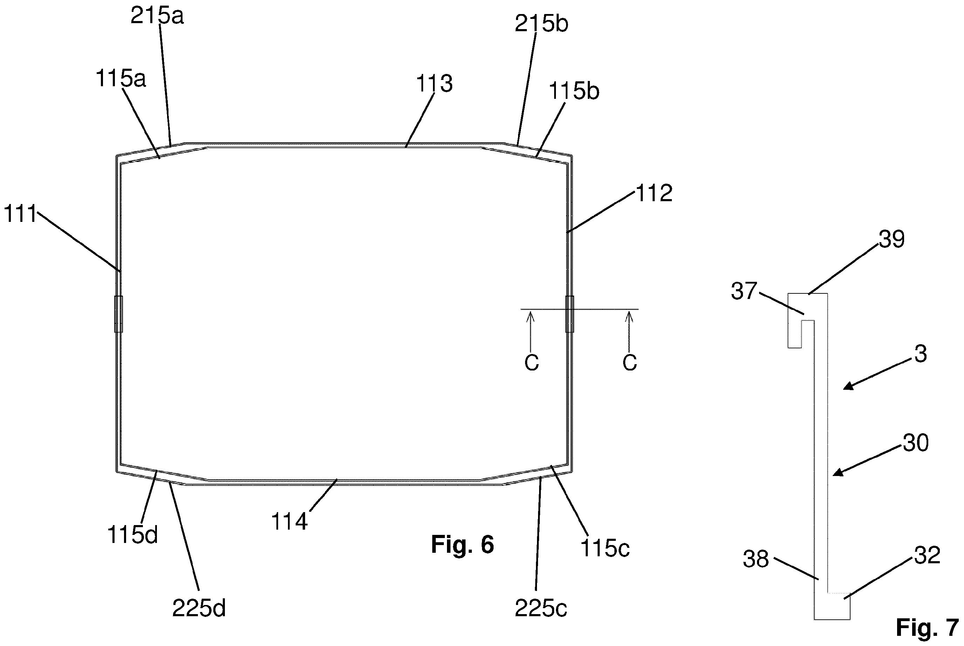

In particular, each body 30 (Fig. 7 comprises a portion 37 which is inverted "U"-shaped in section and a portion 38 which "L"-shaped in section, joined to each other. The portion 37 is engaged with the upper edge 119 of the inner hollow body 11, and the portion 38 comprises said protrusion 31, 32.

Each protrusion 31, 32, in particular, is at a lower height, along axis X, with respect to the upper edge 119 of the inner hollow body 11.

The sliding means 21, 22 comprise two or more shoes 21 and two or more linear guides 22. Each shoe 21 is engaged with a respective linear guide 22. Preferably, four shoes 21 and four linear guides 22 are provided. Preferably, the shoes 21 are fixed to the inner cable body 11 and linear guides 22 are fixed to the outer cable body 12. Preferably, the linear guides 22 are adapted to slide relative to the shoes 21.

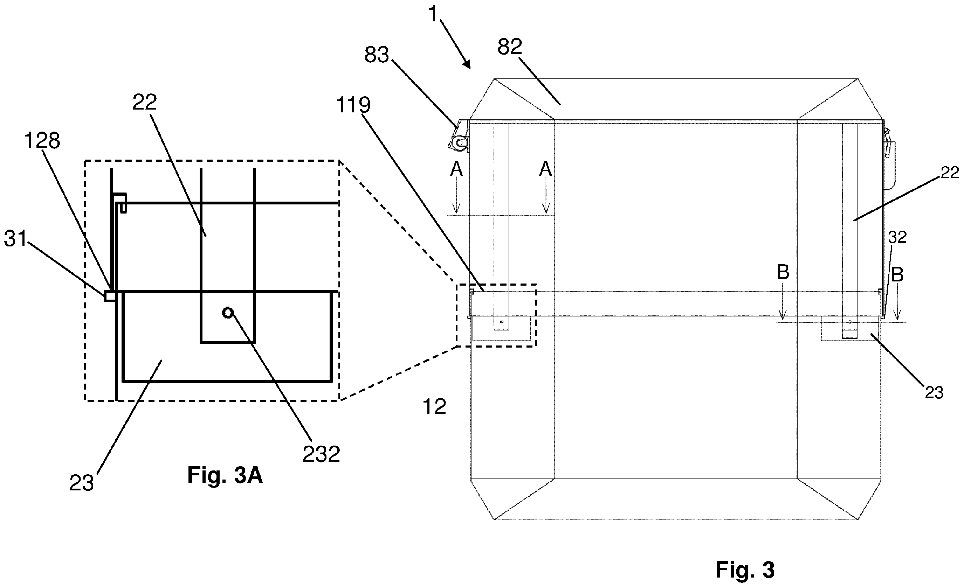

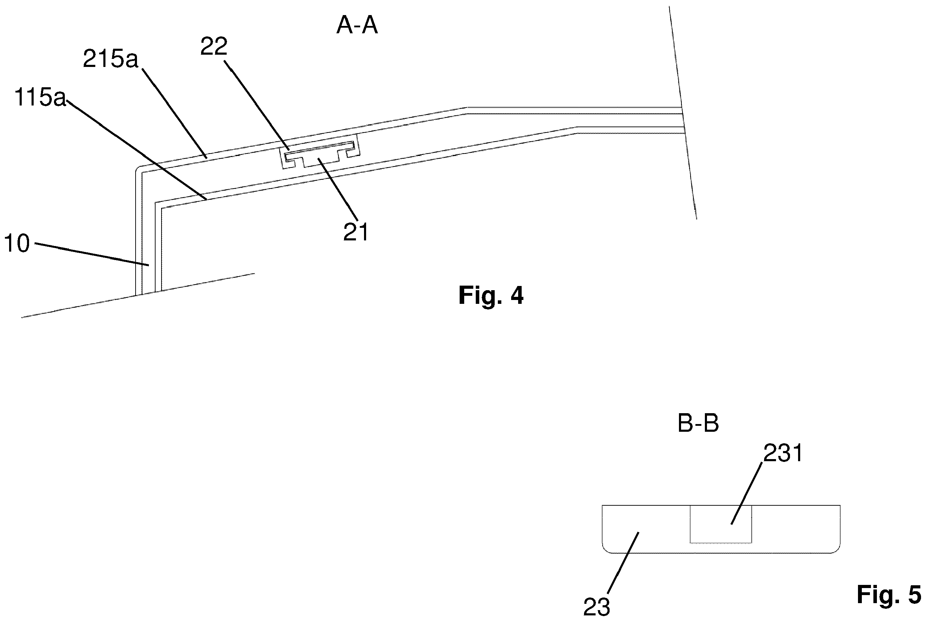

The top box 1 further comprises bodies 23 (Fig. 3, 3A, 5) adapted to act as limit stops for each linear guide 22 during the transition from the retracted position to the extended position. Each body 23 is fixed to the inner hollow body 11, preferably by means of one or more rivets 232. Preferably, each body 23 is provided with a respective seat 231 in which a respective linear guide 22 is arranged, at least partially.

With particular reference to Fig. 6, preferably, the side wall 110 of the inner hollow body 11 either comprises or is formed by:
- said first portion 111 and said second portion 112, which are substantially flat and mutually parallel;
- a third portion 113 and a fourth portion 114, which are substantially flat and mutually parallel, and perpendicular with respect to the first portion 111 and second portion 112;
- four connecting portions 115a, 115b, 115c, 115d, which connect the first portion 111 to the third portion 113, the third portion 113 to the second portion 112, the second portion 112 to the fourth portion 114, and the fourth portion 114 to the first portion 111, respectively; the connecting portions 115a, 115b, 115c, 115d being transverse with respect to the first portion 111 and third portion 113;
Preferably, the side wall 120 of the outer hollow body 12 has portions 211, 212, 213, 214, 215a, 215b, 215c, 215d corresponding, in particular parallel, to said portions 111, 112, 113, 114, 115a, 115b, 115c, 115d of the side wall 110 of the inner hollow body 11. More in particular, each portion 111, 112, 113, 114, 115a, 115b, 115c, 115d faces and is parallel to a respective portion 211, 212, 213, 214, 215a, 215b, 215c, 215d.
Each of the aforesaid portions is substantially a panel.

Preferably, each shoe 21 is fixed to a respective connecting portion 115a, 115b, 115c, 115d; and each linear guide 22 is fixed to a respective connecting portion 215a, 215b, 215c, 215d of the outer hollow body 12.

To transition from the retracted configuration to the extended configuration, a person can grasp the outer hollow body 12 sideways and lift it, sliding it along axis X, taking the lower edge 128 of the outer hollow body 12 above the protrusions 31, 32, and then make it abut against them. This achieves the extended configuration, in which the top box 1 can remain stable.

To transition from the extended configuration to the retracted configuration, the user can press said first portion 111 and second portion 112. In this manner, the protrusions are shifted inward (toward axis X), so that the outer hollow body 12 loses the support of the protrusions 31, 32 and can slide downward to the retracted configuration. In particular, in the retracted configuration, the outer hollow body 12, particularly its inner edge 129, abuts against the upper edge 119 (distal from the bottom 81) of the inner hollow body 11 and/or against an upper portion 39 of each hollow body 30.

One of the advantages of a top box 1 according to the invention is that, in particular by virtue of said protrusions 31, 32 and the flexibility of portion 111 and portion 112, a system is made for transitioning from the extended configuration to the retracted configuration, and vice versa, which is effective and constructively simple and cost-effective.

## Claims

1. A top box (1) for motorcycle or motor scooter,
comprising an inner hollow body (11) and an outer hollow body (12), inserted into each other, mutually constrained so that they can slide relative to each other along an axis (X),
whereby the top box (1) is telescopic, so that it can take a retracted configuration, in which the top box (1) has a first inner volume (V1), and so that it can take an extended configuration, in which the top box (1) has a second inner volume (V2) greater than the first inner volume (V1);
wherein the inner hollow body (11) and outer hollow body (12) have a respective side wall (110, 120) which extends about said axis (X);
**characterized in that**
the inner hollow body (11) and outer hollow body (12) are made of aluminum or aluminum alloy;
the top box (1) comprises
- sliding means (21, 22) adapted to slide the inner hollow body (11) and the outer hollow body (12) mutually along said axis (X), in particular adapted to slide the outer hollow body (12) with respect to the inner hollow body (11);
- constraining means (3) adapted to allow or prevent the sliding of the outer hollow body (12) with respect to the inner hollow body (11), in particular when the top box (1) is in said extended configuration;
said constraining means (3) comprise two protrusions (31, 32) extending outwards from a first portion (111) and a second portion (112) of said side wall (110) of the inner hollow body (11), respectively;
in the extended configuration, the outer hollow body (12) rests on said protrusions (31, 32), so as to prevent the outer hollow body (12) from sliding toward the inner hollow body (11);
in the retracted configuration, said two protrusions (31, 32) are arranged in a respective gap (10) between the inner hollow body (11) and the outer hollow body (12);
said protrusions (21, 32) are fixed to said first portion (111) and second portion (112) of the side wall (110) of the inner hollow body (111), respectively;
said first portion (111) and second portion (112) of the side wall (110) of the inner hollow body (11) are opposite to each other and are adapted to bend, whereby, in the extended configuration, applying a pressure onto said first portion (111) and second portion (112) results in an inward displacement of said protrusions (31, 32), whereby the outer hollow body (12) slides toward the inner hollow body (11), in particular it slides downwards, taking the top box (1) to the retracted configuration.

2. A top box (1) according to claim 1, wherein said second inner volume (V2) is at least 40% greater, preferably from 40 to 80% greater than the first inner volume (V1).

3. A top box (1) according to any one of the preceding claims, wherein the thickness, orthogonally to said axis (X), of each side wall (110, 120) is from 1 to 3 mm.

4. A top box (1) according to any one of the preceding claims, wherein the outer hollow body (12) is provided with an inner edge (129) adapted to abut against the upper edge (119) of the inner hollow body (11) and/or against an upper portion (39) of said constraining means (3) in the retracted configuration of the top box (1).

5. A top box (1) according to any one of the preceding claims, wherein each protrusion (31, 32) is part of a respective body (30) coupled to the upper edge (119) of the inner hollow body (11).

6. A top box (1) according to any one of the preceding claims, wherein each protrusion (31, 32) is at a lower height along the axis (X) with respect to the upper edge (119) of the inner hollow body (11).

7. A top box (1) according to any one of the preceding claims, wherein the sliding means (21, 22) comprise two or more shoes (21) and two or more linear guides (22), each shoe (21) being engaged with a respective linear guide (22); preferably, wherein the shoes (21) are fixed to the inner hollow body (11) and the linear guides (22) are fixed to the outer hollow body (12).
